(19) **Europäisches Patentamt**
**European Patent Office**
**Office européen des brevets**

(11) **EP 2 028 080 B1**

(12) **EUROPEAN PATENT SPECIFICATION**

(45) Date of publication and mention
of the grant of the patent:
**18.01.2012 Bulletin 2012/03**

(51) Int Cl.:
***B62D 5/04*** *(2006.01)*

(21) Application number: **07114837.3**

(22) Date of filing: **23.08.2007**

(54) **Method for operating an electric power steering system, electronic control unit for an electric power steering system and electric power steering system**

Verfahren zum Betreiben einer elektrischen Servolenkung, elektrische Steuereinheit für eine elektrische Servolenkung und elektrische Servolenkung

Procédé de commande d'un système de direction assistée électrique, unité de commande électronique pour un système de direction assistée électrique et système de direction assistée électrique

(84) Designated Contracting States:
**DE FR GB**

(43) Date of publication of application:
**25.02.2009 Bulletin 2009/09**

(73) Proprietor: **Ford Global Technologies, LLC**
**Dearborn, MI 48126 (US)**

(72) Inventors:
• **Lakehal-ayat, Mohsen**
**52072 Aachen (DE)**
• **Shah, Jintendra**
**52072 Aachen (DE)**

• **Hofmann, Otto**
**50374 Erftstadt (DE)**

(74) Representative: **Drömer, Hans-Carsten**
**Ford-Werke Aktiengesellschaft**
**Patentabteilung NH/DRP**
**Henry-Ford-Strasse 1**
**50725 Köln (DE)**

(56) References cited:
**EP-A- 1 574 417      EP-A- 1 749 730**
**EP-A1- 1 990 257     DE-A1- 4 133 238**
**DE-A1- 10 344 279    DE-A1-102005 051 442**

**Description**

The present invention relates to a method for operating an electric power steering system, an electronic control unit for an electric power steering system and an electric power steering system.

Electric power assisted steering (EPAS) systems are used to add a boosting torque to the torque that the driver applies manually on the steering wheel by means of an electric motor. The torque applied by the electric motor largely corresponds to the actual steering torque to a steering mechanism, when a driver steers the steering wheel. As a result, even large steering systems that are difficult to move and which are connected to large inertia masses can be moved by the driver with relatively little manual application of force.

The electric power assisted steering system includes an electronic control unit (ECU) for controlling the applied voltage (motor drive voltage) and/or electric current to the electric motor. The ECU includes a central processing unit (CPU) and a motor driving device, wherein the CPU sends signals to the motor driving device to control the voltage and/or the current applied to the electric motor.

A torque sensor provides torque signals from a steering shaft, which connects the steering wheel with a steering rack for applying steering forces to the tires of a vehicle. Based on the torque sensor signals, the ECU computes the assist torque to be provided by the electric motor. For the computation of the assist torque an algorithm is implemented in the CPU to ensure proper assistance without overriding the driver's need for road feedback, which feedback is transmitted by feedback forces to the steering wheel.

A general aim of EPAS systems is to provide a stable steering feedback for the driver by damping the feedback forces caused by road conditions and/or related vehicle dynamics without generating a friction feeling due to overdamping.

US 6,742,620 B2 discloses a power steering system in which an electric motor makes available a damping torque to a steering system via a mechanical transmission. The transmission is arranged between the steering wheel and a steering rack. The electric motor is actuated by a control unit in accordance with the steering torque sensed by a sensor and the vehicle speed sensed by a sensor. In addition, a damping module of the control unit receives binary or continuous signals relating to the braking state, in particular relating to the brake activation and to cornering. By means of these signals the damping torque which is generated by the electric motor can be adapted in such a way that vibrations which are caused by unequal wear of the brakes in the steering system are reduced.

EP 1574417 A1 discloses an electric power assisted steering device having an electric motor whose output torque is controlled by an electronic control device comprising a signal processing circuit. The signal processing circuit is connected to an output of a flywheel-torque sensor to receive an input signal representing a parameter related to an applied flywheel-torque. The signal processing unit is also connected to a velocity-sensor for the determination of the vehicle-speed. The signal processing circuit attenuates or amplifies the vibratory phenomena according to frequency of the signal.

DE 103 44 279 A1 discloses an electric power steering, which comprises a wheel speed detecting means for detecting a wheel speed of a vehicle body, a vehicle speed calculating means for detecting a vehicle body speed via the wheel speed, a wheel acceleration calculating means for calculating a wheel acceleration from the wheel speed, an assist control means for calculating a prescribed assist characteristic corresponding to the vehicle speed and a steering torque and determining the value of a motor current supplied to an electric motor on the basis of the assist characteristic, an assist correction control means for detecting a road surface condition via the vehicle body speed and/or the wheel acceleration and correcting the motor current value according to the road surface condition, and a motor current control means for controlling the drive of the motor on the basis of the corrected current value.

DE 10 2005 051 442 discloses a device for influencing the noise emissions of an electric power steering system. The device has an accelerometer and equipment for analyzing frequencies of the accelerometer, which are collected and if necessary rectified. A signal generator for controlling the driving motor of the steering element over the current is provided. The compensation signal in form of a motor current modulated component brings the effect at the driving motor of the steering element. There is equipment for the production of a compensation signal from the signal of the frequency analysis mechanism for the reduction of the noise emissions of the steering element.

EP1990257A1 discloses an electric power steering apparatus controlling an electric motor to generate an assist torque, said assist torque being computed based on a determination of a disturbance torque signal related to internal (rattling noise generated in the speed reducing mechanism) and external forces (vibration transmitted to the steering system accompanying braking) acting on the electric power steering system, filtering the input signal (to remove the frequency component corresponding to the vibration that increases the rattling noise), combined with adapting the gain of the filter (to remove specific resonance frequencies) and taking into account a vehicle speed gain (dependent on the vehicle speed) and computing an assist torque only when the vehicle speed is in a predetermined vehicle speed range, and/or maintaining the assist torque when the vehicle is braking, thus the supply of electric power to the electric motor is controlled in accordance with the computed assist torque with at least partial compensation of the disturbance torque.

The EPAS system known from the prior art deals with the damping during brake activation and cornering. Several signal inputs are needed to compute the level of damping and to provide electric power to the electric motor related to the damping needs during braking, but other driving situations are not covered by the known damping algorithm.

The object of the present invention is to provide an improved method for operating an electric power steering system that covers different disturbances based on the sensors implemented in a basic EPAS system.

It is another object of the invention to provide an electronic control unit for an electric power steering system implementing such an algorithm and an electric power steering system implementing such an electronic control unit.

To achieve the above mentioned objects, the invention provides a method for operating an electric power steering system having an electronic control unit for controlling an electric power applied to an electric motor, which electric motor generates assist torque for assisting steering of a steering wheel, said assist torque being computed by means of an algorithm, which algorithm comprises the steps of: determination of a disturbance torque signal related to a disturbance torque whereas the disturbance torque is a result of internal and external forces acting on the electric power steering system, estimation of an amplitude of the disturbance torque signal, classification of the amplitude of the disturbance torque signal for a distinction between wanted and unwanted disturbances, wherein a velocity and a brake status of the vehicle are taken into account for the classification, computation of an assist torque dependent on the classification and the amplitude of the disturbance torque signal and at least partial compensation of the disturbance torque by supply of electric power to the electric motor in accordance with the computed assist torque.

The external forces creating the mentioned disturbance torque are mainly related to the phenomena of nibble and brake judder as well as to road disturbances.

The nature of the first order nibble is a harmonic (sinusoidal) vibrations disturbance with high frequency felt directly on the steering wheel. This disturbance is noticed as steering system error state and generally happens when the vehicle cruises between 100 and 120 km/h. The cause of this disturbance is the net unbalance on front wheels.

The steering vibration due to brake judder is similar to nibble and also occurs at double frequency. This disturbance is perceived by driver only while braking. Brake judder is due to a chain of events, at the beginning of which there is unequal wear of the brake disks which leads to thickness variation of the brake disk. This produces a harmonic modulation of the braking force during braking. The oscillations of the braking force in turn excite different modes of the wheel suspension, the vibrations being transmitted via a kinematical coupling to the steering system and in particular to the steering shaft. The oscillations of the steering shaft may be transmitted to the steering wheel and excite an oscillation of the steering gear, of the steering shaft and of the wheels.

The disturbance torque caused by the nibble phenomenon and/or brake judder as well as road disturbances may be detected by means of a torque sensor being installed at the steering shaft or by means of at least one force sensor mounted at the steering rack, which sensor provides an external force signal representing the actual amount of external forces acting on the steering system.

The signal of the torque sensor or force sensor may be analyzed by means of a analogue-digital-converter to provide a digital signal to the algorithm, wherein a sample frequency $f_S$ preferably is chosen as twice as high as the highest frequency of the disturbance torque signal. An analogue processing of the signal is also feasible.

However, with respect to the limited capacity of the ECU, some regions of the signal, which are not relevant for compensation purposes, are masked out to avoid unnecessary signal computation and to achieve a stable compensation algorithm. The interval of interest of the signal is provided to the estimation and classification means to allow an interpretation of the signal with respect to the important disturbances to be compensated, like the nibble phenomena, the brake judder and road disturbances. The amount of compensation torque is made dependent of the reason of the disturbance; hence a classification of the estimated amplitude is taken into account for the correct choice of the compensation torque.

According to a preferred embodiment of the invention, the disturbance torque signal determined by the torque or force sensor has to pass a bandpass filter with a passband interval of 8 Hz to 35 Hz, preferably of 8 Hz to 25 Hz, in particular from 10 Hz to 22 Hz. The bandpass interval of the bandpass filter is chosen to allow the passage of disturbance torque signals of interest, whereas signals with lower frequencies, which are related to driver's inputs into the steering system and signals with higher frequencies, which are related to disturbances, are not compensated by the EPAS system. The disturbance in the system caused by such low and high frequencies is low with regard of the inertia of the components of the steering system.

According to another preferred embodiment of the invention, the compensation of the disturbance torque is realized by means of an algorithm that estimates the amplitude of the disturbance torque. The estimation means are needed to ensure that maximum amplitude of the signal during a given or variable timeframe is taken into account to avoid unnecessary signal computation and unnecessary activation of the compensation means. The compensation means, in particular the electric motor of the EPAS system, has a given inertia and may not be able to react to each disturbance properly due to its inertia properties. Hence it is advantageous to take into account only the timeframe-related maximum amplitude of the disturbance torque signal and to suppress lower amplitudes. Such an approach allows restricting the computational efforts for the signal determination and also prevents the algorithm to output compensation commands, which cannot be put into practice by the compensation means due to their inertia.

The maximum disturbance torque signal amplitude is determined within a preset number of samples of the total torque signal, which preset number of samples includes $N+1$ samples. $N$ samples for the disturbance torque signal amplitude are output signals of $N$ sample channels, which $N$ sample channels are output channels provided by $N$ delay means. Each sample of the disturbance torque signal output by the bandpass filter is cascaded through at least one of a series of $N$ delay blocks. Each sample, which has been delayed from a preceding delay block is provided to maximum means and also is provided to a successive delay block (if available) in the series of $N$ delay blocks. In addition, the maximum means are provided with an additional sample of the disturbance torque signal directly output by the bandpass filter. Hence the maximum means are provided with an interval of signal samples, which interval is a time spread interval, including samples of timeslots from $t = 0 \cdot \Delta t$ up to $t = N \cdot \Delta t$.

$N$ is determined by the equation $N = \dfrac{1}{2}\dfrac{f_S}{f_T}$,

wherein $f_s$ is the sampling frequency for the disturbance torque signal and $f_T$ is the resonance frequency of the disturbance torque signal.

$\Delta t$ corresponds to the sampling time for the disturbance torque signal amplitude ($\Delta t = 1/f_S$ [s]).

The maximum means detect the maximum disturbance torque signal amplitude within this interval and provide the result to a moving average algorithm to provide an averaged signal.

The averaged amplitude of the disturbance torque signal is determined by averaging means, using the equation:

$$y(n) = \frac{1}{m}\sum_{k=0}^{k=m-1} x(n-k)$$

whereas $m$ is the size of the moving average filter; $n$ is the signal index; k is the counter; $x$ is the input signal and $y$ is the output signal. With such moving average filter, the average of the maximum disturbance torque signal amplitudes provided by the maximum means within a sample size of $m$ is determined. Hence moving average only takes into account the m latest maximum disturbance torque signal amplitudes. This ensures a stable input for the classification algorithm and reduces computation for the compensation torque.

The classification of the amplitude is helpful for choosing the appropriate compensation strategy. The disturbances in the steering system are classified as wanted and unwanted disturbances. The wanted disturbances depend on the amount of disturbance driver likes to feel. If driver goes over cobble stone road or off-road, he needs to feel only percentage of the disturbance. For example, the nibble phenomena only may be taken into account, if the velocity of the vehicle equipped with the EPAS system is above a preset threshold value. The determination of such basic conditions like the vehicle velocity, acceleration or deceleration of the vehicle or other circumstances serve as an input for the computation of the compensation torque. Different levels of compensation torque may be calculated with respect to the classification of the amplitude of the disturbance torque signal.

According to another preferred embodiment of the invention, the averaged amplitude of the disturbance torque signal is classified in consideration of at least one of the additional conditions: steering angle and/or vehicle acceleration. With such classification, an appropriate torque or force compensation based on empiric or calculated compensation forces can be achieved.

Other features and advantages of the present invention will be readily appreciated and better understood after reading the subsequent description when considered in connection with the accompanying drawings.

Fig. 1     is a schematic drawing of an electric assisted power steering apparatus according to the invention,

Fig. 2     is a flow chart illustrating the basic function blocks of the method accord- ing to the invention,

Fig. 3     is a flow chart illustrating the harmonic estimation algorithm according to the invention,

Fig. 4     is a flow chart illustrating the classification logic according to the inven- tion, and

Fig. 5     is a flow chart illustrating the disturbance compensation layout according to the invention.

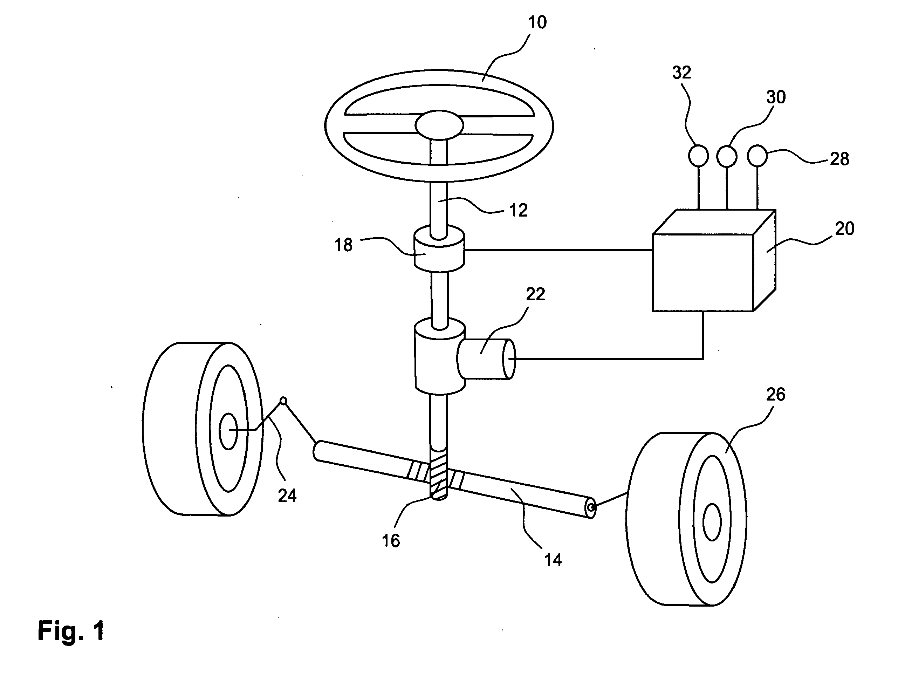

The electric power assisted steering system according to Fig. 1 includes a steering wheel 10 to be operated by a driver, a steering shaft 12 joining the steering wheel 10 with a steering rack 14. The steering rack 14 meshes with a pinion 16, which pinion 16 is connected to the steering shaft 12. A torque sensor 18 is attached to the steering shaft 12 to detect torsion of the steering shaft 12 corresponding proportionally to the steering torque at the steering wheel 10. The torque sensor 18 is electrically connected to an ECU 20, which ECU 20 analyzes the signals of the torque sensor 18 and computes an assist torque. The assist torque is translated into an electric current, which current is provided to an electric motor 22.

The electric motor 22 is coupled to the steering shaft 12 and is capable of providing an assist torque to the steering shaft 12. The torque in the steering shaft 12 generates by meshing of the pinion 16 axial forces in the direction of the longest extension of the steering rack 14. The steering rack 14 is coupled to steering knuckles 24, which steering knuckles 24 are rotably mounted at a car body (not shown). The steering knuckles 24 serve as axles for the wheels 26, which wheels 26 can be rotated by a linear movement of the steering rack 14 to allow the steering of the vehicle.

Additional sensors like a velocity sensor 28, an acceleration sensor 30 and a brake sensor 32 provide their signals to the ECU 20. Hence, the ECU 20 is enabled to compute the assist torque and the amount of electric power to be provided to the electric motor 22 dependent on the signal of the torque sensor 18 and at least one signal of the additional sensors 28, 30, 32.

The torque at the torque sensor 18 is related to internal and external forces and torques applied to the steering system. If the driver turns the steering wheel, the wheels 26 provide a reaction force, which reaction force results in a feedback force to the driver. Some reaction forces are needed to ensure a proper feeling for the driver. Other reaction forces, e.g. reaction forces related to unbalanced tires or uneven brake disc surfaces, do not give any useful information to the driver and therefore shall be eliminated or at least partially compensated to improve the drivers comfort.

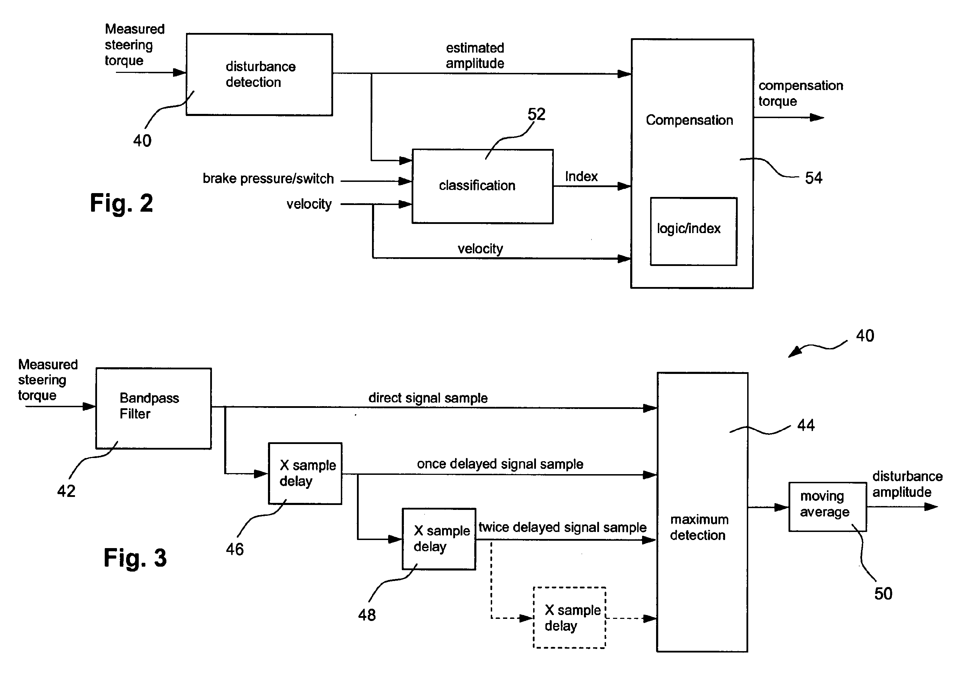

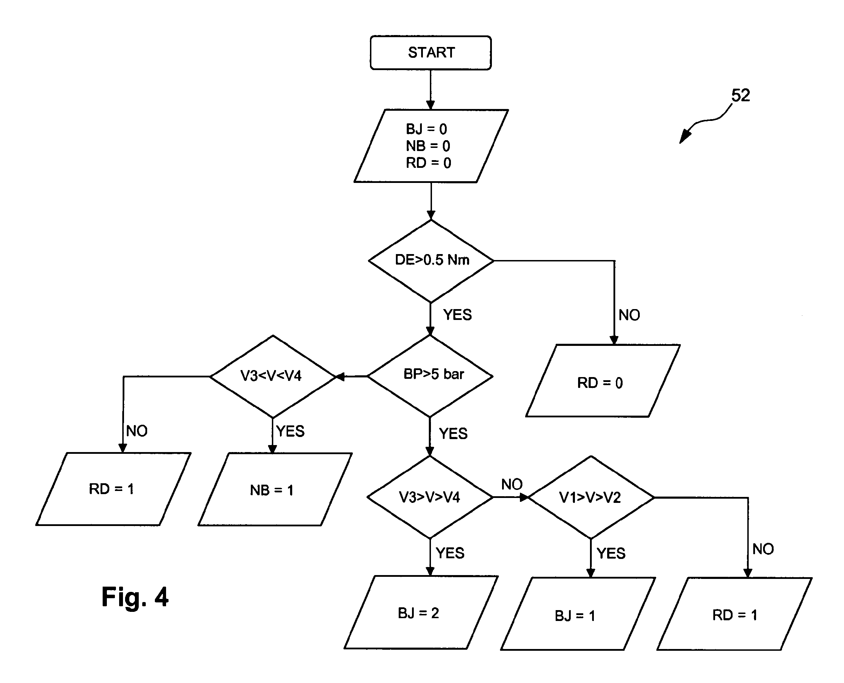

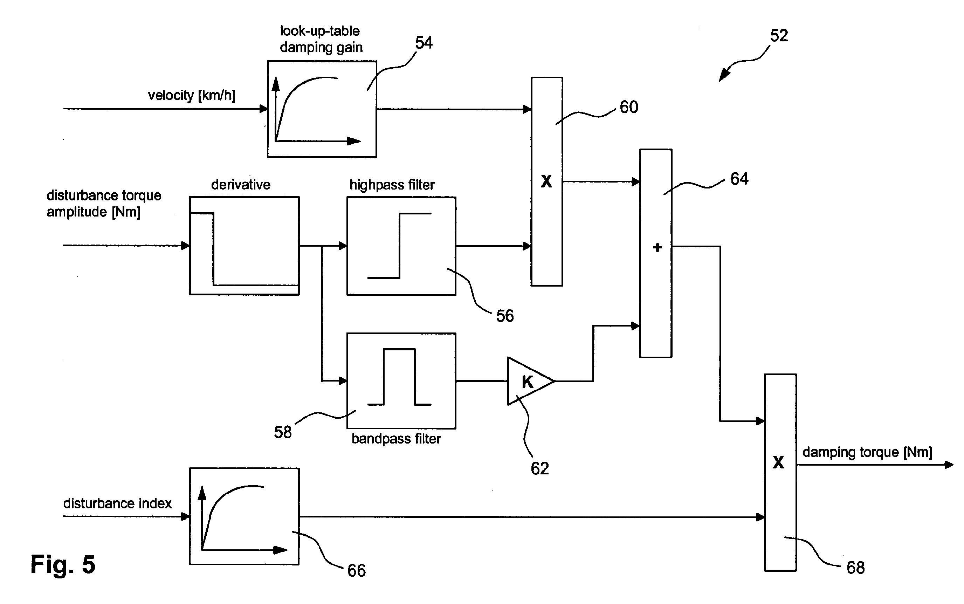

The algorithm according to the invention is illustrated in Figs. 2 to 5. Fig. 2 shows a rough overview over the basic elements of the algorithm. The steering torque detected by the torque sensor according to Fig. 1 is an input to the algorithm according to Fig. 2. Other inputs are the brake pressure and/or brake pressure switch and the vehicle velocity. Based on the detected steering torque an estimated amplitude for the disturbance torque is determined, which is described in detail in Fig. 3. The estimated amplitude for the disturbance torque is provided to a classification module 52, further described in Fig. 4, and to a compensation module 54, further described in Fig. 5.

According to Fig. 3, the disturbance detection module 40 is implemented with a bandpass filter 42 to mask out unwanted frequencies that may be caused by steering action of the driver and/or high frequency disturbances that are not in the focus of the compensation algorithm and may not be detectable for the driver. The masking out of the unwanted frequencies reduces the number of calculations to be made to ensure proper torque compensation.

The input for the bandpass filter 42 is a digitized torque signal, which has been converted by means of an analogue-digital-converter (not shown) at sample frequency $f_S$ [1/s]. The samples of the torque signal are digital, time-related ($\Delta t$) fractions of the analogue torque signal.

Said samples are fed to a maximum module 44 to determine a maximum value out of a number of $N$ samples. The maximum module 44 has $N+1$ input channels, wherein a first channel is directly coupled to the bandpass filter 42. A second channel is coupled to an output of a first X-delay module 46, which X-delay module is capable of delaying a sample with a delay time $td1 = x \cdot \Delta t$. A third channel of the maximum module 44 is coupled to a second X-delay module 48, which second X-delay module 48 is coupled to the output of the first X-delay module 46. Hence, the delay time for the sample provided by the second X-delay module 48 is $td2 = 2 \cdot x \cdot \Delta t$. With such an arrangement, the maximum module 44 allows determining the maximum value from a group of $N+1$ samples occurring within a timeframe of $T = N \cdot x \cdot \Delta t$ of the digitized torque signal and provides said maximum value to the averaging module 50.

The averaging module 50 generates an average value of a group of m values, wherein m is the size of the moving average filter. With each new maximum value being provided to the averaging module 50, the eldest value in the averaging module 50 is not taken any longer into account. The output of the averaging module 50 is a disturbance torque amplitude value based on a number of m samples.

As shown in Fig. 4, the disturbance torque amplitude value (or estimated amplitude) is provided to the classification module 52. In the classification module 52 additional information like the velocity of the vehicle and the brake status is taken into account for the classification of the damping situation and the proper selection of a damping torque.

In a first step subsequent to "START", all registers BJ (brake judder), NB (nibble), RD (road disturbances) are set to zero.

In a subsequent step, the disturbance torque amplitude value is compared to a preset amplitude-threshold. The classification procedure only continues, if the disturbance torque amplitude value is above the preset amplitude threshold, otherwise the procedure ends.

If the disturbance torque amplitude value is above the preset amplitude threshold (for example DE = estimated amplitude > 0.5 Nm), the brake status is determined by reading out the pressure in the brake system.

If the brake pressure is below a preset brake pressure threshold (for example brake pressure BP > 5 bar), a high speed velocity classification for the averaged torque value is implemented to distinguish between road disturbances (if the current velocity of the vehicle is not in the preset interval between V3 and V4) and nibble (if the current velocity of the vehicle is in the preset interval between V3 and V4). If the velocity is not within the preset high speed velocity interval, a road disturbance index is set to 1, otherwise a nibble disturbance index is set to 1.

If the brake pressure is above the preset brake pressure threshold, a high speed velocity classification for the averaged torque value is implemented to detect, whether the disturbance is a second order brake disturbance (if the current velocity of the vehicle is in the preset interval between V3 and V4) or not. If the velocity is within a preset high speed velocity interval, a brake disturbance index is set to 2.

If the current velocity of the vehicle is not in the preset interval between V3 and V4, a low speed velocity classification for the averaged torque value is implemented to distinguish between a first order brake disturbance (if the velocity is within the preset low speed velocity interval between V1 and V2) and a road disturbance (if the velocity is not within the preset low speed velocity interval between V1 and V2). If the velocity I within the preset low speed velocity interval a brake disturbance index is set to 1, otherwise a road disturbance index is set to 1.

The output of the classification module 52 according to Fig. 4 is used for the choice of the damping torque as disclosed in Fig. 5. The compensation module 54 determines the damping torque for the electric motor 22 based on several input values as illustrated left in Fig. 5. The input values are the velocity of the vehicle [km/h], the disturbance torque amplitude (estimated amplitude) [Nm] and the disturbance index [-] as determined by the algorithm according to Fig. 4.

The velocity of the vehicle is provided to a lookup table 54, which lookup table 54 includes velocity dependent damping gains for the compensation of external forces acting on the steering system. The damping gain determined from the lookup table 54 is provided to a multiplication module 60.

The disturbance torque amplitude is differentiated and the differentiated torque [Nm/s] is provided to a highpass filter 56 and in parallel to a bandpass filter 58. The highpass filter 56 has a cut-off frequency of 9 Hz and ensures that only high frequency fractions of the signal are provided to the multiplication module 60. The signal output from the highpass filter 56 is provided to the multiplication module 60 and is multiplied with the damping gain provided from the lookup table 54, the result of this multiplication is provided to an addition module 64.

The bandpass filter has a passband interval from 11 Hz to 35 Hz to mask off unwanted frequencies. The differentiated and bandpass filtered torque is amplified by means of an amplifier 62 with an amplification factor K and is also provided to the addition module 64. The output of the addition module 64 is provided to another multiplication module 68.

The disturbance index provided by the classification module 52 is provided to a torque correction lookup table 66. Dependent from the index determined by the classification module 52 and therefore corresponding to a certain damping situation (nibble, brake judder, road disturbances), a correction torque value is provided to the multiplication module 68 and is multiplied with the output of the addition module 64. The result of the multiplication is the damping torque for the electric motor. This damping torque is translated into an electric current and is provided to the electric motor 22 for the compensation of the disturbance torque acting on the steering system.

## Claims

1. A method for operating an electric power steering system having an electronic control unit (20) for controlling of an electric power applied to an electric motor (22), which electric motor (22) generates assist torque for assisting steering of a steering wheel (10), said assist torque being computed by means of an algorithm, which algorithm comprises the steps of:

   - Determination of a disturbance torque signal related to internal and external forces acting on the electric power steering system,
   - Estimation of an amplitude of the disturbance torque signal,
   - Classification of the amplitude of the disturbance torque signal for a distinction between wanted and unwanted disturbances, wherein a vehicle velocity and a brake status of the vehicle are taken into account for the classification,
   - Computation of an assist torque dependent on the classification and the amplitude of the disturbance torque signal,
   - At least partial compensation of the disturbance torque by supply of electric power to the electric motor (22) in accordance with the computed assist torque.

2. The method according to claim 1, **characterized in that** the disturbance torque signal is filtered by means of an bandpass filter (42), having a passband interval of 8 Hz to 35 Hz, preferably of 8 Hz to 25 Hz, in particular from 10 Hz to 22 Hz.

3. The method according to claim 2, **characterized in that** a maximum disturbance torque signal amplitude in an interval of N+1 samples of the disturbance torque signal is determined by maximum moving average (44).

4. The method according to claim 3, **characterized in that** the N samples for the maximum disturbance torque signal amplitude are output signals of N sample channels, which N sample channels are output channels provided by N delay blocks (46, 48).

5. The method according to claim 4, **characterized in that** each sample of the disturbance torque signal output by the bandpass filter is cascaded through a series of N delay blocks (46, 48).

6. The method according to claim 5,
**characterized in that**
a sample of the disturbance torque signal delayed from a preceding delay block (46, 48) is provided to the maximum means (44) and also is provided to a successive delay block (46, 48) in the series of N delay blocks (46, 48).

7. The method according to claim 6,
**characterized in that**
the maximum means are provided with an additional sample of the disturbance torque signal directly output by the bandpass filter (42).

8. The method according to of claims 3 to 7,
**characterized in that**
$N$ is determined by the equation:

$$N = \frac{1}{2}\frac{f_S}{f_T}$$

wherein $f_s$ is the sample frequency for the disturbance torque signal and $f_T$ is the resonance frequency of nibble and/or brake judder.

9. The method according to one of the preceding claims,
**characterized in that**
an averaged amplitude of the disturbance torque signal is determined by averaging means (50), using the equation:

$$y(n) = \frac{1}{m}\sum_{k=0}^{k=m-1}x(n-k)$$

where $m$ is the size of the moving average filter; $n$ is the signal index; $k$ is the counter; $x$ is the input signal and $y$ is the output signal.

10. The method according to one of the preceding claims,
**characterized in that**
the averaged amplitude of the disturbance torque signal is classified in consideration of at least one of the additional conditions: steering angle and a vehicle acceleration.

11. The method according to one of the preceding claims,
**characterized in that**
a compensation torque for the electric motor is computed with the averaged amplitude of the disturbance torque signal and the classification of the disturbance torque signal serving as input signals.

12. The method according to claim 11,
**characterized in that**
the averaged amplitude of the disturbance torque signal is differentiated and provided to at least one filter of the group highpass filter (56) and bandpass filter (58).

13. The method according to claim 12,
**characterized in that**
a basic damping gain related to the vehicle velocity is determined from a first lookup table (54) or algorithm.

14. The method according to claim 13,
**characterized in that**
a basic damping torque is determined from a multiplication of the basic damping gain with the differentiated and high pass filtered averaged amplitude of the disturbance torque signal.

15. The method according to claim 14,
**characterized in that**
a modified damping torque is determined from an addition of the basic damping torque with the differentiated and bandpass filtered averaged amplitude of the disturbance torque signal, in particular amplified with an amplification coefficient.

16. The method according to claim 15,
**characterized in that**
a damping torque is determined from a multiplication of the modified damping torque with a torque correction value according to the classification of the disturbance torque signal.

17. An electronic control unit for an electric power steering system, which electronic control unit (20) is programmed to execute the method according to one of the claims 1 to 16.

18. An electric power steering system comprising an electronic control unit (20) according to claim 17.

**Patentansprüche**

1. Verfahren zum Betrieb eines elektrischen Servolenksystems mit einer elektronischen Steuereinheit (20) zum Steuern einer an einen Elektromotor (22) angelegten elektrischen Leistung, wobei der Elektromotor (22) Hilfsdrehmoment zum Helfen beim Lenken eines Lenkrads (10) erzeugt, wobei das Hilfsdrehmoment mittels eines Algorithmus berechnet wird, wobei der Algorithmus die folgenden Schritte umfasst:

- Bestimmung eines Störungsdrehmomentsignals, das mit internen und externen an dem elektrischen Servolenksystem wirkenden Kräften in Beziehung steht,
- Schätzung einer Amplitude des Störungsdrehmomentsignals,
- Klassifikation der Amplitude des Störungsdrehmomentsignals für eine Unterscheidung zwischen erwünschten und unerwünschten Störungen, wobei eine Fahrzeuggeschwindigkeit und ein Bremsenstatus des Fahrzeugs für die Klassifikation berücksichtigt werden,
- Berechnung eines Hilfsdrehmoments abhängig von der Klassifikation und der Amplitude des Störungsdrehmomentsignals,
- mindestens teilweise Kompensation des Störungsdrehmoments durch Versorgung des Elektromotors (22) mit elektrischer Leistung gemäß dem berechneten Hilfsdrehmoment.

2. Verfahren nach Anspruch 1,
   **dadurch gekennzeichnet, dass**
   das Störungsdrehmomentsignal mittels eines Bandpassfilters (42) gefiltert wird, das ein Durchlassbandintervall von 8 Hz bis 35 Hz, bevorzugt 8 Hz bis 25 Hz, insbesondere von 10 Hz bis 22 Hz aufweist.

3. Verfahren nach Anspruch 2,
   **dadurch gekennzeichnet, dass**
   eine maximale Störungsdrehmomentsignalamplitude in einem Intervall von N+1 Abtastwerten des Störungsdrehmomentsignals durch einen maximalen gleitenden Mittelwert (44) bestimmt wird.

4. Verfahren nach Anspruch 3,
   **dadurch gekennzeichnet, dass**
   die N Abtastwerte für die maximale Störungsdrehmomentsignalamplitude Ausgangssignale von N Abtastkanälen sind, wobei diese N Abtastkanäle Ausgangskanäle sind, die durch N Verzögerungsblöcke (46, 48) bereitgestellt werden.

5. Verfahren nach Anspruch 4,
   **dadurch gekennzeichnet, dass**
   jeder Abtastwert des durch das Bandpassfilter ausgegebenen Störungsdrehmomentsignals durch eine Reihe von N Verzögerungsblöcken (46, 48) kaskadiert wird.

6. Verfahren nach Anspruch 5,
   **dadurch gekennzeichnet, dass**
   ein von einem vorhergehenden Verzögerungsblock (46, 48) verzögerter Abtastwert des Störungsdrehmomentsignals den Maximum-Mitteln (44) zugeführt wird und außerdem einem sukzessiven Verzögerungsblock (46,48) in der Reihe von N Verzögerungsblöcken (46, 48) zugeführt wird.

7. Verfahren nach Anspruch 6,
   **dadurch gekennzeichnet, dass**
   den Maximum-Mitteln ein zusätzlicher Abtastwert des Störungsdrehmomentsignals bereitgestellt wird, der direkt durch das Bandpassfilter (42) ausgegeben wird.

8. Verfahren nach Anspruch 3 bis 7,
   **dadurch gekennzeichnet, dass**
   N durch die folgende Gleichung bestimmt wird:

$$N = \frac{1}{2}\frac{f_S}{f_T}$$

wobei $f_s$ die Abtastfrequenz des Störungsdrehmomentsignals und $f_T$ die Resonanzfrequenz des Wakkelns und/oder Bremsenratterns ist.

9. Verfahren nach einem der vorhergehenden Ansprüche,
   **dadurch gekennzeichnet, dass**
   eine gemittelte Amplitude des Störungsdrehmomentsignals durch die Mittelungsmittel (50) unter Verwendung der folgenden Gleichung bestimmt wird:

$$y(n) = \frac{1}{m}\sum_{k=0}^{k=m-1}x(n-k)$$

wobei $m$ die Größe des gleitenden Mittelwertfilters; $n$ der Signalindex; $k$ der Zähler; $x$ das Eingangssignal und $y$ das Ausgangssignal ist.

10. Verfahren nach einem der vorhergehenden Ansprüche,
    **dadurch gekennzeichnet, dass**
    die gemittelte Amplitude des Störungsdrehmomentsignals unter Berücksichtigung mindestens einer der folgenden zusätzlichen Bedingungen klassifiziert wird: Lenkwinkel und eine Fahrzeugbeschleunigung.

11. Verfahren nach einem der vorhergehenden Ansprüche,
    **dadurch gekennzeichnet, dass**
    ein Kompensationsdrehmoment für den Elektromotor mit der gemittelten Amplitude des Störungsdrehmomentsignals und der Klassifikation des Störungsdrehmomentsignals als Eingangssignale berechnet wird.

**12.** Verfahren nach Anspruch 11,
**dadurch gekennzeichnet, dass**
die gemittelte Amplitude des Störungsdrehmomentsignals differenziert und mindestens einem Filter der Gruppe von Hochpassfilter (56) und Bandpassfilter (58) zugeführt wird.

**13.** Verfahren nach Anspruch 12,
**dadurch gekennzeichnet, dass**
ein grundlegender Dämpfungsverstärkungsfaktor, der mit der Fahrzeuggeschwindigkeit in Beziehung steht, aus einer ersten Nachschlagetabelle (54) oder einem Algorithmus bestimmt wird.

**14.** Verfahren nach Anspruch 13,
**dadurch gekennzeichnet, dass**
das grundlegende Dämpfungsdrehmoment aus einer Multiplikation des grundlegenden Dämpfungsverstärkungsfaktors mit der differenzierten und hochpassgefilterten gemittelten Amplitude des Störungsdrehmomentsignals bestimmt wird.

**15.** Verfahren nach Anspruch 14,
**dadurch gekennzeichnet, dass**
ein modifiziertes Dämpfungsdrehmoment aus einer Addition des grundlegenden Dämpfungsdrehmoments mit der differenzierten und bandpassgefilterten gemittelten Amplitude des Störungsdrehmomentsignals, insbesondere mit einem Verstärkungskoeffizienten verstärkt, bestimmt wird.

**16.** Verfahren nach Anspruch 15,
**dadurch gekennzeichnet, dass**
ein Dämpfungsdrehmoment aus einer Multiplikation des modifizierten Dämpfungsdrehmoments mit einem Drehmomentkorrekturwert gemäß der Klassifikation des Störungsdrehmomentsignals bestimmt wird.

**17.** Elektronische Steuereinheit für ein elektrisches Servolenksystem, wobei die elektronische Steuereinheit (20) dafür programmiert ist, das Verfahren nach einem der Ansprüche 1 bis 16 auszuführen.

**18.** Elektrisches Servolenksystem, das eine elektronische Steuereinheit (20) nach Anspruch 17 umfasst.

**Revendications**

**1.** Procédé permettant de faire fonctionner un système de direction assistée électrique comprenant une unité de commande électronique (20) destinée à commander une énergie électrique appliquée à un moteur électrique (22), lequel moteur électrique (22) génère un couple d'assistance destiné à assister la manoeuvre d'un volant de direction (10), ledit couple d'assistance étant calculé au moyen d'un algorithme, lequel algorithme comprend les étapes suivantes :

- détermination d'un signal de couple perturbateur lié à des forces internes et externes agissant sur le système de direction assistée électrique,
- estimation d'une amplitude du signal de couple perturbateur,
- classification de l'amplitude du signal de couple perturbateur aux fins d'établir une distinction entre des perturbations désirables et indésirables, une vitesse d'un véhicule et un état de freins du véhicule étant pris en compte dans la classification,
- calcul d'un couple d'assistance en fonction de la classification et de l'amplitude du signal de couple perturbateur,
- compensation au moins partielle du couple perturbateur par alimentation du moteur électrique (22) en énergie électrique conformément au couple d'assistance calculé.

**2.** Procédé selon la revendication 1, **caractérisé en ce** qui :

le signal de couple perturbateur est filtré au moyen d'un filtre passe-bande (42) dont l'intervalle passe-bande est compris entre 8 Hz et 35 Hz, de préférence entre 8 Hz et 25 Hz, de préférence encore entre 10 Hz et 22 Hz.

**3.** Procédé selon la revendication 2, **caractérisé en ce** qui :

une amplitude maximale du signal de couple perturbateur dans un intervalle de $N$+1 échantillons du signal de couple perturbateur est déterminée par moyenne mobile maximale (44).

**4.** Procédé selon la revendication 3, **caractérisé en ce** qui :

les $N$ échantillons pour l'amplitude maximale du signal de couple perturbateur sont des signaux de sortie de $N$ voies d'échantillonnage, lesquelles $N$ voies d'échantillonnage sont des voies de sortie fournies par $N$ blocs à retard (46, 48).

**5.** Procédé selon la revendication 4, **caractérisé en ce** qui :

chaque échantillon du signal de couple perturbateur fourni produit par le filtre passe-bande est transmis en cascade à travers une série de $N$ blocs à retard (46, 48) .

**6.** Procédé selon la revendication 5, **caractérisé en**

**ce** qui :

un échantillon du signal de couple perturbateur retardé par un bloc à retard précédent (46, 48) est fourni au module de maximum (44) ainsi qu'à un bloc à retard suivant (46, 48) dans la série de $N$ blocs à retard (46, 48).

**7.** Procédé selon la revendication 6, **caractérisé en ce** qui :

le moyen de maximum reçoit un échantillon supplémentaire du signal de couple perturbateur directement fourni par le filtre passe-bande (42).

**8.** Procédé selon les revendications 3 à 7, **caractérisé en ce** qui :

$N$ est déterminé par l'équation :

$$N = \frac{1}{2}\frac{f_S}{f_T}$$

où $f_s$ est la fréquence d'échantillonnage pour le signal de couple perturbateur et $f_T$ est la fréquence de résonance des vibrations du volant de direction et/ou des trépidations au freinage.

**9.** Procédé selon l'une des revendications précédentes, **caractérisé en ce** qui :

une amplitude moyennée du signal de couple perturbateur est déterminée par un moyen de calcul de moyenne (50) au moyen de l'équation :

$$y(n) = \frac{1}{m}\sum_{k=0}^{k=m-1}x(n-k)$$

où $m$ est la dimension du filtre à moyenne mobiles ; $n$ est l'indice du signal ; $k$ est le compteur ; $x$ est le signal d'entrée et $y$ est le signal de sortie.

**10.** Procédé selon l'une des revendications précédentes, **caractérisé en ce** qui :

l'amplitude moyennée du signal de couple perturbateur est classifiée compte tenu d'au moins une des conditions supplémentaires suivantes : un angle de braquage et une accélération du véhicule.

**11.** Procédé selon l'une des revendications précédentes, **caractérisé en ce** qui :

un couple de compensation pour le moteur électrique est calculé en utilisant comme signaux d'entrée l'amplitude moyennée du signal de couple perturbateur et la classification du signal de couple perturbateur.

**12.** Procédé selon la revendication 11, **caractérisé en ce** qui :

l'amplitude moyennée du signal de couple perturbateur est différentiée et fournie à au moins un filtre dans le groupe constitué par un filtre passe-haut (56) et un filtre passe-bande (58).

**13.** Procédé selon la revendication 12, **caractérisé en ce** qui :

un gain d'amortissement de base lié à la vitesse du véhicule est déterminé à partir d'une première table à consulter (54) ou d'un algorithme.

**14.** Procédé selon la revendication 13, **caractérisé en ce** qui :

un couple d'amortissement de base est déterminé à partir d'une multiplication du gain d'amortissement de base par l'amplitude moyennée différentiée et filtrée par filtre passe-haut du signal de couple perturbateur.

**15.** Procédé selon la revendication 14, **caractérisé en ce** qui :

un couple d'amortissement modifié est déterminé à partir d'une somme du couple d'amortissement de base et de l'amplitude moyennée différentiée et filtrée par filtre passe-bande du signal de couple perturbateur, plus particulièrement amplifiée par un coefficient d'amplification.

**16.** Procédé selon la revendication 15, **caractérisé en ce** qui :

un couple d'amortissement est déterminé à partir d'une multiplication du couple d'amortissement modifié par une valeur de correction de couple en fonction de la classification du signal de couple perturbateur.

**17.** Unité de commande électronique pour un système de direction assistée électrique, laquelle unité de commande électronique (20) est programmée pour exécuter le procédé selon l'une des revendications 1 à 16.

**18.** Système de direction assistée électrique, comprenant une unité de commande électronique (20) selon la revendication 17.

Fig. 1

EP 2 028 080 B1

**Fig. 2**

Measured steering torque → disturbance detection → estimated amplitude → Compensation → compensation torque

40

brake pressure/switch →
velocity →
classification
52
Index →

velocity →

Compensation

logic/index

54

**Fig. 3**

40

Measured steering torque → Bandpass Filter → direct signal sample → maximum detection → moving average → disturbance amplitude

42

X sample delay → once delayed signal sample

46

X sample delay → twice delayed signal sample

48

X sample delay

44

50

**Fig. 4**

```
                    ┌──────────┐
                    │  START   │
                    └────┬─────┘
                         ▼
                    ┌──────────┐
                    │  BJ = 0  │
                    │  NB = 0  │
                    │  RD = 0  │
                    └────┬─────┘
                         ▼
                   ◇ DE>0.5 Nm ◇ ──NO──► RD = 0
                         │
                        YES
                         ▼
   V3<V<V4 ◄──── ◇ BP>5 bar ◇
      │  │              │
     NO YES            YES
      │  │              ▼
   RD=1 NB=1      ◇ V3>V>V4 ◇ ──NO──► ◇ V1>V>V2 ◇ ──NO──► RD = 1
                       │                   │
                      YES                 YES
                       ▼                   ▼
                     BJ = 2              BJ = 1
```

Fig. 5

EP 2 028 080 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6742620 B2
- EP 1574417 A1
- DE 10344279 A1
- DE 102005051442
- EP 1990257 A1